# FASCICULE DE BREVET EUROPEEN

(11) **EP 1 939 373 B1**
(45) Date de publication et mention de la délivrance du brevet: **18.04.2018**
(21) Numéro de dépôt: 07150108.4
(22) Date de dépôt: 19.12.2007
(51) Int. Cl.: G01P 13/00, E06B 9/68, E04F 10/06

(54) **Procédé de réglage d'un seuil de sécurité au-delà duquel un store doit être enroulé**
Verfahren zur Regulierung einer Sicherheitsschwelle, oberhalb derer eine Jalousie aufgerollt werden muss
Method for adjusting a security threshold beyond which a roller blind must be rolled up

(30) Priorité: 26.12.2006 FR 0611368
(43) Date de publication de la demande: 02.07.2008
(73) Titulaire: Somfy SAS, 74300 Cluses (FR)
(72) Inventeur: Grehant, Bernard, 74300, Nancy-sur-Cluses (FR)
(74) Mandataire: Bugnion Genève

(56) Documents cités:
- EP-A- 1 659 256
- DE-U1- 9 306 368
- FR-A1- 2 811 431

## Description

L'invention se rapporte à un procédé de réglage d'un seuil de sécurité déclenchant l'émission, par un dispositif de capteur d'accélération ou de mouvement, d'un signal de sécurité provoquant un mouvement de sécurité d'un écran motorisé de fermeture, de protection solaire ou d'occultation. L'invention concerne également un dispositif de capteur d'accélération ou de mouvement pour la mise en oeuvre d'un tel procédé.

Il est connu d'utiliser un capteur de vibration, comprenant par exemple un accéléromètre, pour détecter les mouvements provoqués par le vent sur une structure mobile telle qu'un store. Le capteur est fixé contre la structure mobile, en un endroit où les effets du vent sont particulièrement marqués. Il comprend également un dispositif d'analyse des signaux issus de l'accéléromètre et un émetteur radio pour envoyer à une unité de commande d'un moteur un ordre de repli du store quand le niveau de vibrations dépasse un seuil prédéterminé.

On connaît par exemple un tel dispositif de la demande FR 2 811 431.

Le document EP 1 659 256 décrit un capteur semblable pour détecter la présence de vent et commander en conséquence une installation de protection solaire.

Un problème posé par ce type de capteur est celui de l'affectation de seuils de réglage (pour ajuster le niveau de sensibilité du capteur).

En effet, il est important que le capteur comprenne un boîtier parfaitement étanche, car la structure mobile, sensible aux effets du vent, est également soumise aux intempéries, humidité ou brouillards salins.

Le moyen de réglage du seuil ou des seuils n'est accessible qu'après démontage du boîtier, ce qui implique le plus souvent de désolidariser le capteur de la structure.
Par ailleurs, l'ajustement d'un potentiomètre de réglage situé un boîtier fermé est malaisé. Inversement, le fait de rendre la commande du potentiomètre accessible depuis l'extérieur renchérit considérablement le coût, du fait de la contrainte d'étanchéité.
Le but de l'invention est de fournir un procédé de réglage de dispositif de capteur obviant aux inconvénients cités précédemment et améliorant les procédés de réglage connus de l'art antérieur. En particulier, l'invention propose un procédé de réglage simple et limitant les interventions sur le dispositif de capteur. L'invention concerne encore un dispositif de capteur pour la mise en oeuvre d'un tel procédé de réglage.
Le procédé de réglage selon l'invention est défini par la revendication 1. Différents modes d'exécution du procédé de réglage sont définis par les revendications 2 à 7. Le dispositif de capteur selon l'invention est défini par la revendication 8. Le dessin annexé représente, à titre d'exemple, un mode de réalisation d'un dispositif de capteur selon l'invention et un mode d'exécution d'un procédé de réglage d'un dispositif de capteur selon l'invention.
La figure 1 est un schéma d'une installation comprenant un dispositif de capteur selon l'invention.
La figure 2 est un schéma éclaté d'un dispositif de capteur selon l'invention.
La figure 3 est un schéma électrique d'un dispositif de capteur selon l'invention.
La figure 4 est un ordinogramme représentant un mode d'exécution d'un procédé de réglage d'un dispositif de capteur selon l'invention.
La figure 5 est un ordinogramme représentant un mode d'exécution de la première étape du procédé de réglage.

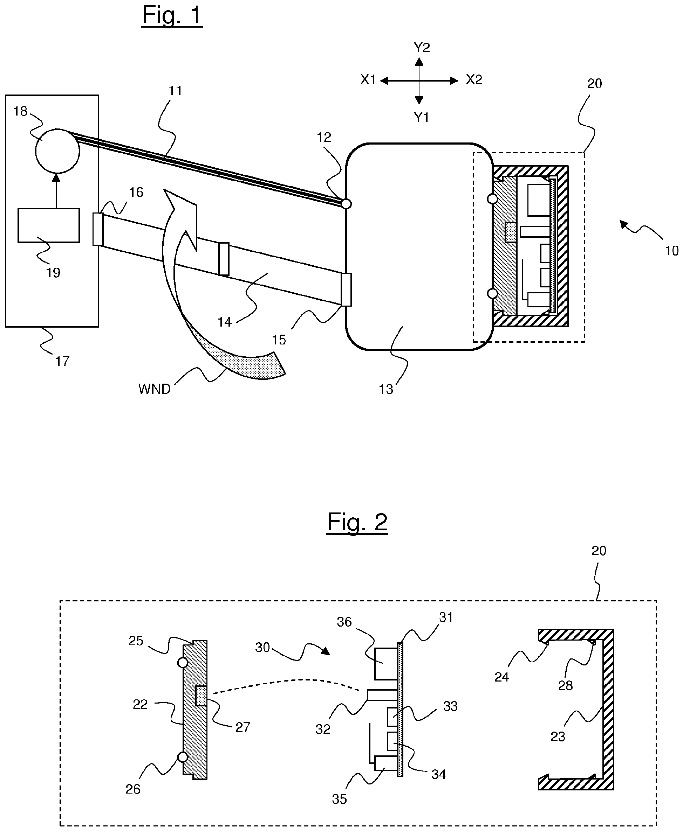

La figure 1 représente une installation 10 comprenant un store de terrasse motorisé dont la toile 11 est accrochée par une fixation 12 à une barre de charge 13. La toile s'enroule sur un tube motorisé 18. Quand le moteur enroule la toile sur le tube d'enroulement, celle-ci provoque le mouvement de la barre de charge 13 dans la direction X1 et, dans une moindre mesure, dans la direction Y2. Une pluralité de bras articulés 14, munis de ressorts, permettent d'exercer un effort sur la barre de charge 13 dans la direction X2 et, dans une moindre mesure, dans la direction Y1 de manière à maintenir la toile tendue. Le bras articulé 14 est raccordé à la barre de charge par une première articulation 15. Le bras articulé comprend d'autres articulations, en particulier une deuxième articulation 16 le raccordant à la structure fixe 17 de l'installation, qui comprend le tube d'enroulement motorisé. Barre de charge, toile et bras articulés constituent la structure mobile.

L'installation 10 comprend également un dispositif de capteur 20, fixé sur la barre de charge 13. Le dispositif de capteur 20 pourrait être situé en tout emplacement tel que le vent (représenté par une flèche pleine WND), agissant sur la toile 11 provoque des mouvements de la structure mobile, en particulier de l'emplacement où est situé le dispositif de capteur. Le dispositif de capteur 20 émet un signal de sécurité vers une unité de commande 19. Cette unité de commande génère les ordres de commande du tube motorisé. Elle comprend un récepteur radiofréquences muni d'une antenne, et éventuellement un capteur de type météorologique.

La figure 2 détaille les éléments compris dans le dispositif de capteur 20. Dans le mode de réalisation préféré, le dispositif de capteur comprend un socle 22 fixé sur la structure mobile, et une partie amovible 23 formant couvercle et comprenant les composants électroniques du dispositif de capteur.

Le couvercle 23 comprend des clips 24 permettant un accrochage rapide du couvercle 23 au socle 22 dans des évidements 25. Le socle est fixé rigidement à la barre de charge 13 par des moyens de fixation 26 représentés par des cercles. Il peut s'agir simplement de vis de serrage. Le socle comprend enfin un élément primaire 27 de détection de fermeture du boîtier, par exemple un aimant, une pastille réfléchissante ou un ergot susceptible d'agir sur un interrupteur. Le socle et le couvercle forment le boîtier du dispositif de capteur.

Le dispositif de capteur 20 comprend également un circuit électronique 30. Les composants sont montés sur un circuit imprimé 31, fixé au couvercle 23 par des ergots de fixation 28. Ces composants comprennent un élément secondaire 32 de détection de fermeture du boîtier, par exemple un interrupteur à lame souple (ILS ou Reed) commandé par un aimant, un optocoupleur ou un simple interrupteur. L'élément secondaire coopère avec l'élément primaire, comme représenté par une ligne courbe pointillée, pour délivrer un état électrique représentatif de l'état de fermeture du boîtier.

Le circuit imprimé supporte également un moyen capteur de vibration 33, par exemple un accéléromètre ou un détecteur inertiel à bille et contact, ou tout dispositif de détection de mouvement.

Une unité logique de traitement 34, par exemple un microcontrôleur, un émetteur radio 35 et son antenne, une pile 36 sont également implantés sur le circuit imprimé 31 du dispositif de capteur.

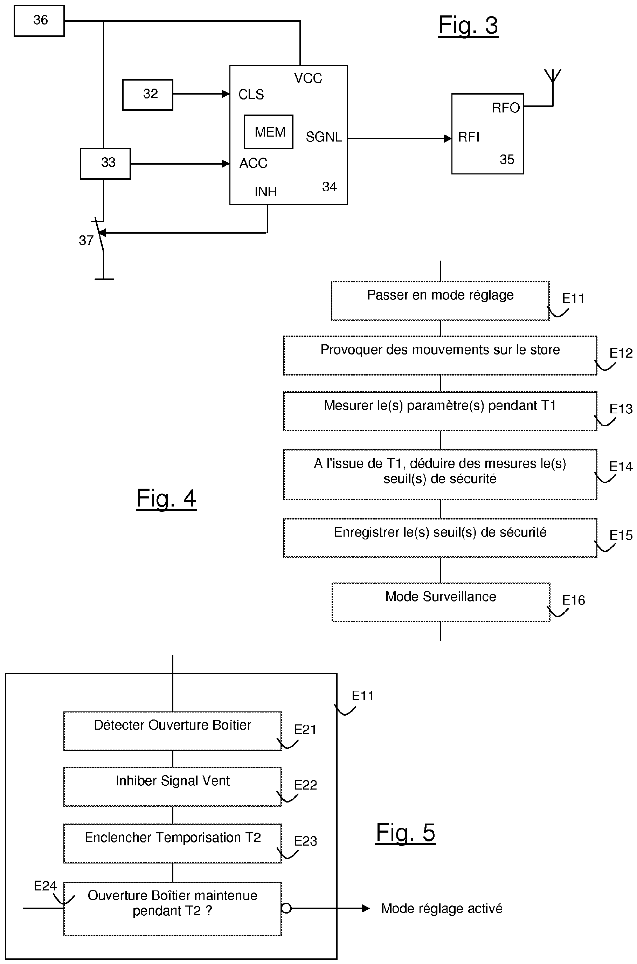

Les liaisons entre ces éléments sont précisées par la figure 3.

L'unité logique de traitement comprend notamment des moyens logiciels pour régir le fonctionnement du dispositif de capteur pendant son réglage selon le procédé de réglage objet de l'invention et dont un mode d'exécution est décrit en détail plus bas. En particulier, ces moyens logiciels comprennent des programmes informatiques.

L'unité logique de traitement 34 est alimentée par la pile 36, de même que le moyen capteur de vibration 33 si un interrupteur commandé 37 est fermé. Les signaux issus du moyen capteur de vibration 33 sont transmis à une première entrée ACC de l'unité logique de traitement. L'élément secondaire 32 de fermeture du boîtier a sa sortie raccordée à une deuxième entrée CLS de l'unité logique de traitement. Cette entrée est à l'état logique bas tant que le boîtier est fermé. Dans ce cas, les signaux issus du moyen capteur de vibration sont traités, et, s'ils dépassent un ou plusieurs seuil(s) prédéterminés, alors un signal de commande est transmis depuis une première sortie SGNL de l'unité logique de traitement vers une entrée RFI de l'émetteur radio 35, dont une sortie RFO alimente une antenne radiofréquences, et qui émet alors un signal de sécurité « vent ».

Alternativement, les éléments primaire et secondaire détectent non pas l'ouverture du boîtier mais sa fixation à un emplacement prédéterminé de la structure mobile. Par exemple, un aimant sert d'élément primaire et est disposé en un point de la structure mobile, tandis qu'un capteur Reed sert d'élément secondaire. L'élément primaire peut aussi être constitué par une simple pièce ferromagnétique en forme de U disposée sur la structure mobile, tandis que l'aimant et le capteur Reed sont placés dans le boîtier. Quand le boîtier est placé au voisinage de la pièce ferromagnétique, celle-ci canalise le flux magnétique de l'aimant et le renvoie vers le capteur Reed.

Afin de permettre l'interchangeabilité des boîtiers en cas de besoin de remplacement d'un élément défectueux, tout élément primaire est susceptible de coopérer avec tout élément secondaire quand il s'agit d'éléments de même type.

Si l'entrée logique CLS passe à l'état haut, alors l'unité logique de traitement ne tient plus compte du signal issu du moyen capteur de vibration. Dans le mode de réalisation représenté sur la figure 3, un interrupteur à ouverture commandée 37 est piloté par une sortie d'inhibition INH de l'unité logique de traitement 34, ce qui a pour effet de supprimer l'alimentation du moyen capteur de vibration 33, et donc tout signal issu de ce dernier. Alternativement, l'unité logique de traitement 34 peut simplement mettre fin à l'analyse des signaux présents sur son entrée ACC, ou encore bloquer temporairement l'envoi d'une commande d'émission de signal vers l'émetteur radio 35, ou enfin supprimer temporairement l'alimentation de l'émetteur radio 35 par un moyen semblable à l'interrupteur commandé 37, ou en utilisant le même interrupteur commandé 37 pour couper l'alimentation du moyen capteur de vibration et de l'émetteur radio.

Une fois le dispositif de capteur configuré, son fonctionnement est tel que, quand des mouvements ou des vibrations dépassent un seuil de sécurité prédéterminé, le dispositif de capteur émet un signal de sécurité déclenchant un mouvement de sécurité de l'écran, par exemple un repli dans le cas d'un store à bras.

Un mode d'exécution du procédé de réglage selon l'invention est décrit en détail ci-après en référence à la figure 4.

Dans une première étape E11, on fait passer le dispositif de capteur dans un mode de réglage. Ceci peut être réalisé selon différentes procédures. Par exemple, si le dispositif de capteur comprend des moyens de réception non filaires de signaux, un signal de passage en mode de réglage peut lui être transmis depuis une télécommande avec laquelle il est appairé. Alternativement, le dispositif de capteur peut comprendre un interrupteur spécifique permettant le passage en mode de réglage lorsqu'il est activé. Enfin, si le dispositif de capteur est du type décrit précédemment, il est possible que le passage en mode de réglage soit déclenché par une séquence d'actions de dépose et/ou ouverture et pose et/ou fermeture du boîtier du dispositif de capteur selon un déroulement temporel déterminé. Par exemple, une ouverture du boîtier suivie d'une fermeture du boîtier intervenant moins de 10 secondes après l'ouverture provoque le passage en mode de réglage du dispositif de capteur, comme détaillé plus bas.

Dans une deuxième étape E12, l'installateur agite l'écran, le dispositif de capteur étant monté sur ce dernier. Le mouvement et/ ou les vibrations que crée l'installateur par les efforts qu'il exerce sur l'écran seront ceux qui sont déterminants pour définir un seuil de sécurité au-delà duquel le dispositif de capteur émettra un signal, une fois complètement configuré. Par construction, un store est capable de supporter des rafales de vent assez violentes, mais l'agitation de la structure donne une perception inquiétante à l'utilisateur. Il est donc souhaitable que l'installateur donne au store un mouvement d'agitation correspondant à ce qui paraît inquiétant à l'utilisateur, et non à ce que pourrait véritablement supporter le store.

Dans une troisième étape E13 se déroulant simultanément à l'étape E12, on enregistre le signal issu du moyen capteur de vibration. Cette étape d'enregistrement à une première durée prédéterminée T1 par exemple entre 30 secondes et 3 minutes, cette durée débutant dès le passage en mode de réglage. Les données définissant le signal sont stockées dans une mémoire MEM de l'unité logique de traitement 34. Ces données sont par exemple des valeurs résultant d'un échantillonnage du signal issu du moyen capteur de vibration.

A l'issue de l'étape E13, dans une quatrième étape E14, on calcule une ou plusieurs valeurs de seuil de sécurité à partir de l'enregistrement réalisé précédemment et à partir d'algorithmes ou de règles empiriques. Pour ce faire, l'unité logique de traitement 34 comprend un programme de calcul stocké en mémoire MEM et permettant de traiter les valeurs précédemment stockées en mémoire.

Par exemple, un seuil de sécurité peut être déterminé à partir de la valeur la plus forte mesurée, ou à partir de la moyenne des dix plus fortes valeurs. Ou encore, un premier seuil de sécurité peut être déterminé pour une fréquence d'oscillations élevée (ou pour un régime impulsionnel), alors qu'un deuxième seuil peut être déterminé pour une fréquence d'oscillations basse.

Ces déterminations de valeurs peuvent être faites automatiquement comme décrit aux trois paragraphes qui précèdent grâce à un enchaînement automatique des étapes.

Alternativement, il peut être mis fin à l'étape E13 par une action de l'installateur, comme un appui sur une touche d'une télécommande (par exemple sur la touche d'arrêt commandant un arrêt de l'actionneur lorsqu'il fonctionne).

Enfin, on peut fusionner les étapes E13 et E14 en une seule étape dans laquelle on met en permanence à jour une valeur déterminée par le signal issu du capteur de vibration. Par exemple, ceci peut être fait grâce à un détecteur de crête, conservant en mémoire la valeur maximum prise par le signal. La dernière valeur obtenue à la fin de l'étape est par exemple la valeur de seuil de sécurité.

Dans une cinquième étape E15, on enregistre la ou les valeurs de seuil de sécurité dans la mémoire MEM.

Dans une sixième étape E16, à l'issue de l'étape précédente, le dispositif de capteur bascule automatiquement dans le mode de fonctionnement, dit mode de surveillance. Le dispositif de capteur est alors opérationnel.

Dans une septième étape facultative et non représentée, le dispositif de capteur peut signaler à l'installateur qu'un ou plusieurs seuils de sécurité ont été enregistrés et que le dispositif de capteur est opérationnel.

La figure 5 détaille un mode de réalisation de la première étape E11 du procédé de réglage, permettant le passage en mode réglage.

Dans une première sous-étape E21 de l'étape de passage en mode réglage, l'installateur ouvre le boîtier ou dépose celui-ci, après avoir déployé le store au moins partiellement, ce qui est détecté par les moyens de détection.

Dans une deuxième sous-étape E22, le signal de sécurité vent est inhibé, de manière à éviter tout repli automatique du store dû aux mouvements exercés par l'utilisateur sur le boîtier.

Dans une troisième sous-étape E23, on enclenche une deuxième temporisation T2 présentant une faible durée, par exemple comprise entre 2 et 10 secondes.

Dans une quatrième sous-étape E24, il est testé si la dépose et/ou l'ouverture du boîtier, détectée dans la première sous-étape E21, est maintenue pendant la durée de la deuxième temporisation. Si non, le boîtier a été refermé ou remis en place pendant la durée de la deuxième temporisation, alors le mode de réglage est activé et la première étape E11 est terminée.

Un installateur qui souhaite procéder au réglage des seuils de sensibilité du capteur-émetteur doit donc exécuter une opération très simple : retirer le boîtier capteur-émetteur de son support, et le remettre en place au bout de quelques secondes, ou alternativement ouvrir puis refermer le boîtier. Cette opération est réalisée alors que le store est déployé, au moins partiellement.

Si ce mode de réalisation est utilisé, alors l'autorisation d'émission du signal de sécurité vent est rétablie au début de la sixième étape E16.

L'entrée dans l'étape de réglage peut être confirmée à l'installateur par un signal sensoriel : par exemple un bip sonore émis par le capteur-émetteur, ou, préférentiellement par l'unité de commande 19 après que celle-ci eût reçu un message radio du capteur-émetteur l'informant de l'entrée en étape de réglage.
Le procédé selon l'invention est applicable à d'autres écrans qu'un store.

## Revendications

1. Procédé de réglage d'un seuil de sécurité déclenchant l'émission, par un dispositif de capteur (20) d'accélération ou de mouvement, d'un signal de sécurité provoquant un mouvement de sécurité d'un écran motorisé (11) de fermeture, de protection solaire ou d'occultation, **caractérisé en ce qu'**il comprend les étapes suivantes :
- passage du dispositif de capteur dans un mode réglage,
- agitation manuelle de l'écran,
- enregistrement d'un signal délivré par un moyen capteur (33) pendant l'étape d'agitation manuelle, des données définissant le signal étant stockées dans une mémoire d'une unité logique de traitement (34),
- détermination par calcul du seuil de sécurité à partir de l'enregistrement précédent.

2. Procédé de réglage selon la revendication 1, **caractérisé en ce qu'**il comprend en outre une étape d'enregistrement du seuil de sécurité dans une mémoire.

3. Procédé de réglage selon la revendication précédente, **caractérisé en ce que** le dispositif de capteur passe automatiquement dans un mode de fonctionnement à l'issue de l'étape d'enregistrement.

4. Procédé de réglage selon l'une des revendications précédentes, **caractérisé en ce que** l'étape de détermination du seuil de sécurité comprend une étape de détermination de la plus forte amplitude du signal dans l'enregistrement et une étape d'affectation de cette amplitude du signal comme seuil de sécurité.

5. Procédé de réglage selon l'une des revendications 1 à 3, **caractérisé en ce que** l'étape de détermination du seuil de sécurité comprend une étape de détermination de la moyenne des dix plus fortes amplitudes du signal dans l'enregistrement et une étape d'affectation de cette moyenne comme seuil de sécurité.

6. Procédé de réglage selon l'une des revendications précédentes, **caractérisé en ce qu'**il comprend une étape préliminaire de basculement en mode de réglage, ce basculement étant provoqué par :
- au moins une première action de dépose et/ou d'ouverture d'un boîtier (22, 23) contenant le capteur d'accélération ou de mouvement, puis
- une deuxième action de remise en place et/ou de fermeture du boîtier,
dans un intervalle de temps prédéterminé.

7. Procédé de réglage selon l'une des revendications précédentes, **caractérisé en ce que** la fin de l'étape d'enregistrement résulte de la fin d'une temporisation enclenchée en début d'enregistrement ou d'une action particulière sur une télécommande agissant sur l'écran motorisé.

8. Dispositif de capteur (20) destiné à émettre un signal de sécurité provoquant un mouvement de sécurité d'un écran motorisé (11) de fermeture, de protection solaire ou d'occultation, **caractérisé en ce qu'**il comprend des moyens matériels (32, 33, 34, MEM) et logiciels mettant en oeuvre le procédé de réglage selon l'une des revendications précédentes, les moyens matériels comprenant un élément (32) de détection de fermeture d'un boîtier, un moyen capteur de vibration (33), une mémoire (MEM) dans laquelle sont stockées les données définissant un signal issu du moyen capteur de vibration, notamment des valeurs résultant d'un échantillonnage du signal issu du moyen capteur de vibration, et une unité logique de traitement (34) comprenant un programme de calcul stocké en mémoire (MEM) et permettant de traiter les valeurs stockées en mémoire.

## Patentansprüche

1. Regulierungsverfahren einer Sicherheitsschwelle, die durch eine Beschleunigungs- oder Bewegungssensorvorrichtung (20) das Senden eines Sicherheitssignals auslöst, das eine Sicherheitsbewegung eines motorisierten Verschluss-, Sonnenschutz- oder Verdunkelungsvorhangs (11) bewirkt, **dadurch gekennzeichnet, dass** es die folgenden Schritte umfasst:
- Übergehen der Sensorvorrichtung in einen Regulierungsmodus,
- manuelles Betätigen des Vorhangs,
- Registrieren eines von einem Sensormittel (33) während des Schritts des manuellen Betätigens bereitgestellten Signals, wobei Daten, die das Signal definieren, in einem Speicher einer logischen Verarbeitungseinheit (34) gespeichert werden,
- Bestimmen, durch Berechnen, der Sicherheitsschwelle auf der Basis der vorangegangenen Registrierung.

2. Regulierungsverfahren nach Anspruch 1, **dadurch gekennzeichnet, dass** es ferner einen Registrierungsschritt der Sicherheitsschwelle in einem Speicher umfasst.

3. Regulierungsverfahren nach vorangehendem Anspruch, **dadurch gekennzeichnet, dass** die Sensorvorrichtung nach Abschluss des Registrierungsschritts automatisch in einen Betriebsmodus wechselt.

4. Regulierungsverfahren nach einem der vorangehenden Ansprüche, **dadurch gekennzeichnet, dass** der Bestimmungsschritt der Sicherheitsschwelle einen Bestimmungsschritt der stärksten Amplitude des Signals bei der Registrierung und einen Zuweisungsschritt dieser Amplitude des Signals als Sicherheitsschwelle umfasst.

5. Regulierungsverfahren nach einem der Ansprüche 1 bis 3, **dadurch gekennzeichnet, dass** der Bestimmungsschritt der Sicherheitsschwelle einen Bestimmungsschritt des Durchschnitts der zehn stärksten Amplituden des Signals bei der Registrierung und einen Zuweisungsschritt dieses Durchschnitts als Sicherheitsschwelle umfasst.

6. Regulierungsverfahren nach einem der vorangehenden Ansprüche, **dadurch gekennzeichnet, dass** es einen vorherigen Übergangsschritt in den Regulierungsmodus umfasst, wobei dieser Übergang bewirkt wird durch:
- mindestens eine erste Demontage- und/oder Öffnungsaktion eines Kastens (22, 23), der den Beschleunigungs- oder Bewegungssensor enthält, dann
- eine zweite Montage- und/oder Verschlussaktion des Kastens in einem vorbestimmten Zeitintervall.

7. Regulierungsverfahren nach einem der vorangehenden Ansprüche, **dadurch gekennzeichnet, dass** das Ende des Registrierungsschritts aus dem Ende einer Verzögerung, die am Anfang der Registrierung ausgelöst wurde, oder aus einer besonderen Aktion auf einer Fernsteuerung, die auf den motorisierten Vorhang einwirkt, resultiert.

8. Sensorvorrichtung (20), die bestimmt ist, ein Sicherheitssignal zu senden, das eine Sicherheitsbewegung eines motorisierten Verschluss-, Sonnenschutz- oder Verdunkelungsvorhangs (11) auslöst, **dadurch gekennzeichnet, dass** sie Hardwaremittel (32, 33, 34, MEM) und Softwaremittel umfasst, die das Regulierungsverfahren nach einem der vorangehenden Ansprüche umsetzen, wobei die Hardwaremittel ein Element (32) zur Detektion des Verschlusses eines Kastens, ein Vibrationssensormittel (33), einen Speicher (MEM), in dem die Daten gespeichert sind, die ein von dem Vibrationssensorelement ausgegebenes Signal definieren, insbesondere Werte, die aus einem Sampling des von dem Vibrationssensormittel ausgegebenen Signals resultieren, und eine logische Verarbeitungseinheit (34), die ein Rechenprogramm umfasst, das im Speicher (MEM) gespeichert ist und erlaubt, die im Speicher gespeicherten Werte zu verarbeiten, umfassen.

## Claims

1. A method for setting a safety threshold that triggers the sending, by an acceleration or movement sensor device (20), of a safety signal that causes a safety movement of a motorized screen (11) used as a closure or as a sunshade or for privacy, said method comprising the following steps:
- putting the sensor device into a setting mode,
- manual shaking of the screen,
- recording of a signal produced by a sensor means (33) during the manual shaking step, data defining the signal being recorded into a memory of a logical processing unit (34), and
- determination by calculation of the safety threshold from this recording.

2. The setting method as claimed in claim 1, also comprising a step of recording the safety threshold in a memory.

3. The setting method as claimed in claim 2, in which the sensor device automatically enters an operating mode at the end of the recording step.

4. The setting method as claimed in any of the preceding claims, in which the step of determining the safety threshold includes a step of determining the greatest amplitude of the signal in the recording and a step of making this signal amplitude the safety threshold.

5. The setting method as claimed in any one of claims 1 to 3, in which the step of determining the safety threshold includes a step of determining the mean of the ten strongest amplitudes of the signal in the recording and a step of making this mean the safety threshold.

6. The setting method as claimed in any one of the preceding claims, including a preliminary step of switching to setting mode, this switching being caused by:
- at least one first action of removing and/or opening a housing (22, 23) containing the acceleration or movement sensor, followed by
- a second action of putting the housing back in place and/or closing it,
within a predetermined time interval.

7. The setting method as claimed in any one of the preceding claims, in which the end of the recording step results from the end of a time period triggered at the start of the recording or from a particular action on a remote control acting on the motorized screen.

8. A sensor device (20) for transmitting a safety signal causing a safety movement of a motorized screen (11) used as a closure or as a sunshade or for privacy, said device comprising hardware (32, 33, 34, MEM) and software for implementing the setting method as claimed in claim 1, the hardware comprising an element (32) for detecting the closure of a housing, sensor means for sensing vibrations (33), a memory (MEM) in which the data defining a signal produced by the sensor means is recorded, typically values resulting from a sampling of the signal produced by the sensor means, and a logical processing unit (34) comprising a calculation software recorded in the memory (MEM) and allowing the processing of the values recorded in the memory.
